# EUROPEAN PATENT APPLICATION

(11) **EP 2 849 386 A1**
(43) Date of publication of application: **18.03.2015**
(21) Application number: 12876471.9
(22) Date of filing: 29.06.2012
(51) Int. Cl.: H04L 12/28

(54) **SELF-ADAPTIVE BANDWIDTH DISTRIBUTION METHOD AND SYSTEM**

(30) Priority: 07.05.2012 CN 201210138377
(71) Applicant: ZTE Corporation, Shenzhen, Guangdong 518057 (CN)
(72) Inventor: LIU, Wei, Shenzhen Guangdong 518057 (CN); MA, Xiaoliang, Shenzhen Guangdong 518057 (CN); MENG, Yichao, Shenzhen Guangdong 518057 (CN)
(74) Representative: Brevalex
(86) International application number: PCT/CN2012/077923
(87) International publication number: WO 2013/166769

(57) **Abstract**

A method and system for adaptive bandwidth allocation are disclosed. The method includes evenly allocating the whole bandwidth to each user according to the number of the users currently connecting to a gateway, making statistics on the traffic usage of each user within a preset period, and dynamically allocating a bandwidth to each user according to the traffic usage and the theoretical traffic of the allocated bandwidth. According to the technical scheme of the disclosure, when there is a user connecting to or disconnecting from the gateway, the bandwidth can be evenly allocated according to the number of the users currently connecting to the gateway, the bandwidth of each user can be dynamically adjusted according to actual bandwidth utilization rates of the users, the bandwidths of the users with lower bandwidth utilization rates are reduced, and the bandwidths of the users with higher bandwidth utilization rates are increased, so that reasonable bandwidth allocation is fulfilled.

## Description

### TECHNICAL FIELD

The disclosure relates to the technical field of Internet, in particular to an adaptive bandwidth allocation method and an adaptive bandwidth allocation system.

### BACKGROUND

At present, there are abundant resources represented in various forms on the Internet. Massive data can be shared on the Internet, for example, online video formats include a standard-definition format and a high-definition format, which can meet requirements of different users.

With the continuous enrichment of the resources on the Internet, the requirements of the users on bandwidths are increasing. In order to widen the coverage of a network and relieve the pressure of a 3^{rd}-Generation (3G) network, an operator vigorously constructs a wireless local area network in a place such as an airport with concentrated population. However, if a part of users use a high-speed downloading service, most of a bandwidth of the network is likely to be preempted to cause serious influence on the normal use of the other users over the network. For example, in a bandwidth-limited small-scale local area network, a user who is using the high-speed downloading service or watching a high-definition video may occupy most of the bandwidth of the network and disable other users to normally use Internet services and even normally browse web pages, and such a condition is particularly obvious for a public hotspot.

Now, a method of allocating a fixed bandwidth to each user is usually adopted for network bandwidth management. However, this method cannot realize bandwidth regulation according to the number of the users, and even though few users log in the network, each user cannot be allocated with more bandwidth.

At present, there is another network bandwidth management method of allocating the bandwidth according to priority of services to allocate more bandwidths to the services with higher priority to ensure the prior processing of the services with higher priority. But when the method is adopted, the user is required to know the message type of each service in advance, and then marks the priority of each message according to a quintuple (a source Internet Protocol (IP) address, a source port, a destination IP address, a destination port and a transport layer protocol number). However, it is difficult for an ordinary user without computer professional knowledge to finish the operation of setting the priority of the messages.

From the above, there is yet no implementation scheme capable of dynamically adjusting the bandwidth for each user at present.

### SUMMARY

To this end, a main purpose of the disclosure is to provide a method and system for adaptive bandwidth allocation, which are used for dynamically adjusting :heustingand system for idth to ecting to or disconnecting from the a bandwidth of each user to achieve reasonable bandwidth allocation.

In order to achieve the purpose, a technical scheme of the disclosure is implemented as follows.

The method includes evenly allocating the whole bandwidth to each user according to the number of the users currently connecting to a gateway;
making statistics on the traffic usage of each user within a preset period; and
dynamically allocating a bandwidth to each user according to the traffic usage and the theoretical traffic of the allocated bandwidth.

Preferably, dynamically allocating the bandwidth to each user according to the traffic usage and the theoretical traffic of the allocated bandwidth includes:
calculating a bandwidth utilization rate of each user according to the traffic usage and the theoretical traffic of the allocated bandwidth;
classifying a part of the bandwidths of the users with the bandwidth utilization rates lower than a preset lower limit value of a utilization rate as a redundant bandwidth; and
allocating the redundant bandwidth to the users with the bandwidth utilization rates higher than a preset upper limit value of the utilization rate.

Preferably, allocating the redundant bandwidth to the users with the bandwidth utilization rates higher than the preset upper limit value of the utilization rate includes:
evenly allocating the redundant bandwidth to each user according to the number of the users with the bandwidth utilization rates higher than the preset upper limit value of the utilization rate.

Optionally, before evenly allocating the whole bandwidth to each user according to the number of the users currently connecting to the gateway, the method further includes:
monitoring situations of users connecting to or disconnecting from the gateway in real time, and when there is a user connecting to or disconnecting from the gateway, acquiring the number of the users currently connecting to the gateway.

Preferably, classifying a part of the bandwidths of the users with the bandwidth utilization rates lower than the preset lower limit value of the utilization rate as the redundant bandwidth includes:
classifying 20 percent of the bandwidths of the users with the bandwidth utilization rates lower than the preset lower limit value of the utilization rate as the redundant bandwidth; and
preferably, the preset lower limit value of the utilization rate is 50 percent.

Preferably, the preset upper limit value of the utilization rate is 70 percent.

The disclosure also provides a system for adaptive bandwidth allocation, which includes:
a bandwidth even-allocation unit, configured to evenly allocate the whole bandwidth to each user according to the number of users currently connecting to a gateway;
a traffic usage statistical unit, configured to make statistics on the traffic usage of each user within a preset period; and
a bandwidth dynamic-allocation unit, configured to dynamically allocate a bandwidth to each user according to the traffic usage and the theoretical traffic of the allocated bandwidth.

Preferably, the bandwidth dynamic-allocation unit includes:
a bandwidth utilization rate calculation subunit, configured to calculate a bandwidth utilization rate of each user according to the traffic usage and the theoretical traffic of the allocated bandwidth;
a redundant bandwidth classification subunit, configured to classify a part of the bandwidths of the users with the bandwidth utilization rates lower than a preset lower limit value of a utilization rate as a redundant bandwidth; and
a redundant bandwidth allocation subunit, configured to allocate the redundant bandwidth to the users with the bandwidth utilization rates higher than a preset upper limit value of the utilization rate.

Preferably, the redundant bandwidth allocation subunit is specifically configured to evenly allocate the redundant bandwidth to each user according to the number of the users with the bandwidth utilization rates higher than the preset upper limit value of the utilization rate.

Preferably, the redundant bandwidth classification subunit is specifically configured to classify 20 percent of the bandwidths of the users with the bandwidth utilization rates lower than the preset lower limit value of the utilization rate as the redundant bandwidth.

Optionally, the system further includes:
a user amount acquisition unit, configured to monitor situations of users connecting to and disconnecting from the gateway in real time, and when there is a user connecting to or disconnecting from the gateway, acquire the number of the users currently connecting to the gateway.

From the above, according to the technical scheme of the disclosure, when there is a user connecting to or disconnecting from a gateway, bandwidths can be evenly allocated according to the number of the users currently connecting to the gateway, the bandwidth of each user can be dynamically adjusted according to actual bandwidth utilization rates of the users, the bandwidths of the users with lower bandwidth utilization rates are reduced, and the bandwidths of the users with higher bandwidth utilization rates are increased, so that reasonable bandwidth allocation is fulfilled.

### BRIEF DESCRIPTION OF THE DRAWINGS

Fig. 1 is a flowchart of an embodiment of an adaptive bandwidth allocation method provided by the disclosure;
Fig. 2 is a structure diagram of an embodiment of an adaptive bandwidth allocation system provided by the disclosure; and
Fig. 3 is a flowchart of an embodiment of an adaptive bandwidth allocation method provided by the disclosure.

### DETAILED DESCRIPTION

A basic thought of the disclosure is that the whole bandwidth is evenly allocated to each user according to the number of the users currently connecting to a gateway; statistics on the traffic usage of each user within a preset period is made; and a bandwidth is dynamically allocated to each user according to the traffic usage and the theoretical traffic of the allocated bandwidth.

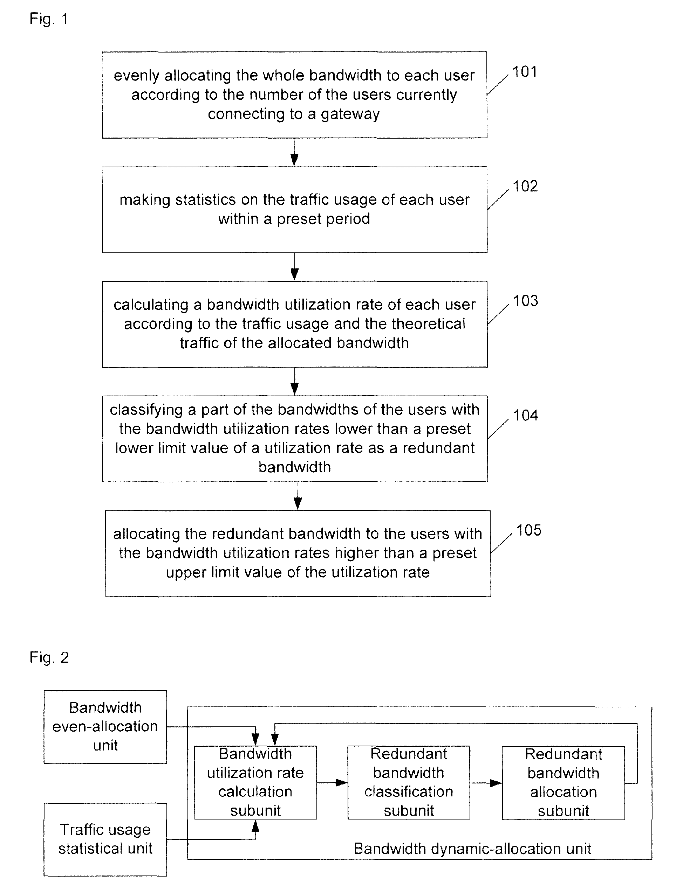

An adaptive bandwidth allocation method provided by the disclosure is introduced below, and as shown in Fig. 1, the method includes:
Step101; equally allocating the whole bandwidth to each user according to the number of the users currently connecting to a gateway;
Step102: making statistics on the traffic usage of each user within a preset period;
Step103: calculating a bandwidth utilization rate of each user according to the traffic usage and the theoretical traffic of the allocated bandwidth;
Step104: classifying a part of the bandwidths of the users with the bandwidth utilization rates lower than a preset lower limit value of utilization rate as a redundant bandwidth;
here, the preset lower limit value of utilization rate may be 50 percent; classifying a part of the bandwidths of the users with the bandwidth utilization rates lower than the preset lower limit value of utilization rate as the redundant bandwidth may include: classifying 20 percent of the bandwidths of the users with the bandwidth utilization rates lower than the preset lower limit value of utilization rate as the redundant bandwidth.

Step105: allocating the redundant bandwidth to the users with the bandwidth utilization rates higher than a preset upper limit value of utilization rate.

Here, the preset upper limit value of utilization rate may be 70 percent. Allocating the redundant bandwidth to the users with the bandwidth utilization rates higher than the preset upper limit value of utilization rate may include: evenly allocating the redundant bandwidth to each user according to the number of the users with the bandwidth utilization rates higher than the preset upper limit value of utilization rate.

Optionally, before evenly allocating the whole bandwidth to each user according to the number of the users currently connecting to the gateway, the method further includes: monitoring the situations of the users connecting to or disconnecting from the gateway in real time, and when there is a user connecting to or disconnecting from the gateway, acquiring the number of the users currently connecting to the gateway.

The disclosure also provides an adaptive bandwidth allocation system for implementing the method, and as shown in Fig. 2, the system includes:
a bandwidth even-allocation unit, configured to evenly allocate the whole bandwidth to each user according to the number of the users currently connecting to a gateway;
a traffic usage statistical unit, configured to make statistics on the traffic usage of each user within a preset period; and
a bandwidth dynamic-allocation unit, configured to dynamically allocate a bandwidth to each user according to the traffic usage and the theoretical traffic of the allocated bandwidth.

The bandwidth dynamic-allocation unit includes:
a bandwidth utilization rate calculation subunit, configured to calculate a bandwidth utilization rate of each user according to the traffic usage and the theoretical traffic of the allocated bandwidth;
a redundant bandwidth classification subunit, configured to classify a part of the bandwidths of the users with the bandwidth utilization rates lower than a preset lower limit value of utilization rate as a redundant bandwidth,
wherein the redundant bandwidth classification subunit may specifically be configured to classify 20 percent of the bandwidths of the users with the bandwidth utilization rates lower than the preset lower limit value of utilization rate as the redundant bandwidth; and
a redundant bandwidth allocation subunit, configured to allocate the redundant bandwidth to the users with the bandwidth utilization rates higher than a preset upper limit value of a utilization rate;
wherein the redundant bandwidth allocation subunit may specifically be configured to evenly allocate the redundant bandwidth to each user according to the number of the users with the bandwidth utilization rates higher than the preset upper limit value of the utilization rate.

Optionally, the system further includes a user amount acquisition unit, configured to monitor the situations of the users connecting to and disconnecting from the gateway in real time, and when there is a user connecting to or disconnecting from the gateway, acquire the number of the users currently connecting to the gateway.

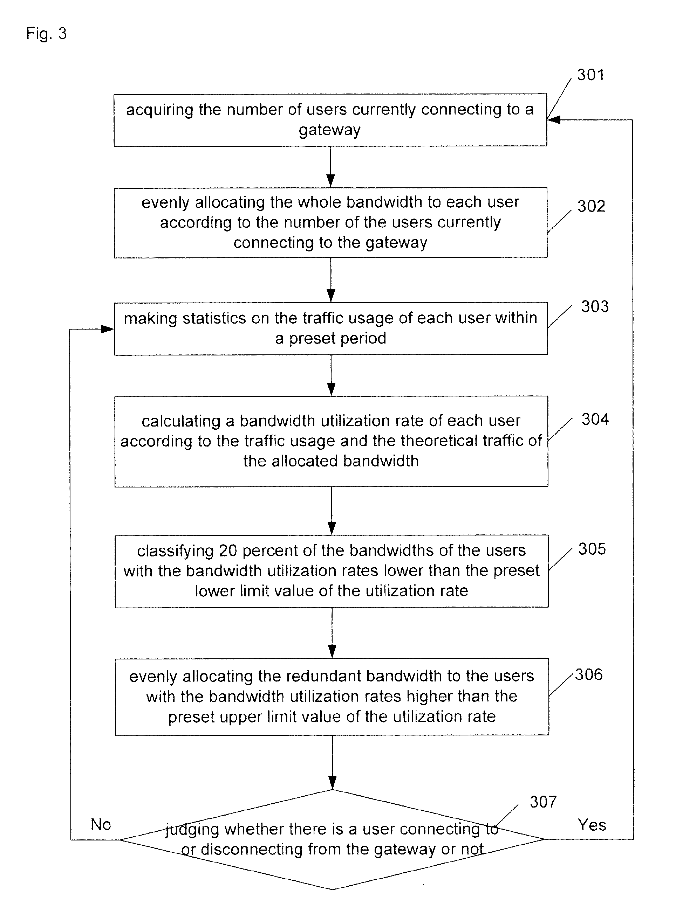

An embodiment of an adaptive bandwidth allocation method provided by the disclosure is introduced below, and as shown in Fig. 3, the embodiment includes the following steps:
Step 301: acquiring the number of users currently connecting to a gateway;
Step 302: equally allocating the whole bandwidth to each user according to the number of the users currently connecting to the gateway, and generating a bandwidth allocation table, wherein the bandwidth allocation table is used for storing the bandwidth information of each user;
Step 303: making statistics on the traffic usage of each user within a preset period, and repeating Step 303;
   in the embodiment, the preset period is set to be 5 minutes, that is, the statistics on the traffic usage of each user within 5 minutes is made;
   here, the users can be distinguished according to Media Access Control (MAC) addresses.
Step 304: calculating a bandwidth utilization rate of each user according to the traffic usage and the theoretical traffic of the allocated bandwidth; here, the bandwidth utilization rate is obtained by dividing the traffic usage by the theoretical traffic; the theoretical traffic can be obtained according to the bandwidth information of each user in the bandwidth allocation table;
Step 305: classifying 20 percent of the bandwidths of the users with the bandwidth utilization rates lower than the preset lower limit value of the utilization rate as the redundant bandwidth;
   in the embodiment, the preset lower limit value of the utilization rate is 50 percent, and may be set to be 30 percent, 40 percent and the like according to actual conditions, but not limited to 50 percent;
   in practice, the bandwidths of the users may be classified according to actual conditions, and may be 10 percent, 25 percent and the like, but not limited to 20 percent;
   in addition, the redundant bandwidth may also be set according to actual conditions; for example, the redundant bandwidth is set according to the bandwidth utilization rates, and if the bandwidth utilization rate is higher, less bandwidth is classified as redundant bandwidth; and if the bandwidth utilization rate is lower, more bandwidth is classified as redundant bandwidth;
Step 306: equally allocating the redundant bandwidth to the users with the bandwidth utilization rates higher than the preset upper limit value of the utilization rate, and updating the bandwidth allocation table according to a current bandwidth of each user;
   in the embodiment, the preset upper limit value of the utilization rate is 70 percent, and it may be set to be 80 percent, 85 percent and the like according to actual conditions, but, not limited to 70 percent;
   in practice, the redundant bandwidth may also be unevenly allocated according to actual conditions;
   for example, the redundant bandwidth is allocated according to the bandwidth utilization rates, and if the bandwidth utilization rate is higher, more bandwidth is classified as redundant bandwidth; and if the bandwidth utilization rate is lower, less bandwidth is classified as redundant bandwidth.
Step 307: judging whether there is a user connecting to or disconnecting from the gateway or not, entering Step 301 when there is a user connecting to or disconnecting from the gateway, and when there is no user connecting to or disconnecting from the gateway, entering Step 303.

From the above, according to the technical scheme of the disclosure, when there is a user connecting to or disconnecting from the gateway, the bandwidth can be evenly allocated according to the number of the users currently connecting to the gateway, the bandwidth of each user can be dynamically adjusted according to actual bandwidth utilization rates of the users, the bandwidths of the users with lower bandwidth utilization rates are reduced, and the bandwidths of the users with higher bandwidth utilization rates are increased, so that reasonable bandwidth allocation is fulfilled.

The above are only the preferred embodiments of the disclosure and not intended to limit the scope of protection of the disclosure.

## Claims

1. A method for adaptive bandwidth allocation, comprising:
evenly allocating a whole bandwidth to each user according to the number of users currently connecting to a gateway;
making statistics on traffic usage of each user within a preset period; and
dynamically allocating a bandwidth to each user according to the traffic usage and theoretical traffic of the allocated bandwidth.

2. The method according to claim 1, wherein dynamically allocating the bandwidth to each user according to the traffic usage and the theoretical traffic of the allocated bandwidth comprises:
calculating a bandwidth utilization rate of each user according to the traffic usage and the theoretical traffic of the allocated bandwidth;
classifying a part of bandwidths of users with bandwidth utilization rates lower than a preset lower limit value of a utilization rate as a redundant bandwidth; and
allocating the redundant bandwidth to users with bandwidth utilization rates higher than a preset upper limit value of the utilization rate.

3. The method according to claim 2, wherein allocating the redundant bandwidth to the users with the bandwidth utilization rates higher than the preset upper limit value of the utilization rate comprises:
evenly allocating the redundant bandwidth to each user according to the number of the users with the bandwidth utilization rates higher than the preset upper limit value of the utilization rate.

4. The method according to claim 2, before evenly allocating the whole bandwidth to each user according to the number of the users currently connecting to the gateway, the method further comprising:
monitoring situations of users connecting to or disconnecting from the gateway in real time, and when there is a user connecting to or disconnecting from the gateway, acquiring the number of the users currently connecting to the gateway.

5. The method according to claim 2, wherein classifying a part of the bandwidths of the users with the bandwidth utilization rates lower than the preset lower limit value of the utilization rate as the redundant bandwidth comprises:
classifying 20 percent of the bandwidths of the users with the bandwidth utilization rates lower than the preset lower limit value of the utilization rate as the redundant bandwidth.

6. The method according to claim 2, wherein the preset lower limit value of the utilization rate is 50 percent.

7. The method according to claim 2, wherein the preset upper limit value of the utilization rate is 70 percent.

8. A system for adaptive bandwidth allocation, comprising:
a bandwidth even-allocation unit, configured to evenly allocate whole bandwidth to each user according to the number of users currently connecting to a gateway;
a traffic usage statistical unit, configured to make statistics on traffic usage of each user within a preset period; and
a bandwidth dynamic-allocation unit, configured to dynamically allocate a bandwidth to each user according to the traffic usage and theoretical traffic of the allocated bandwidth.

9. The system according to claim 8, wherein the bandwidth dynamic-allocation unit comprises:
a bandwidth utilization rate calculation subunit, configured to calculate a bandwidth utilization rate of each user according to the traffic usage and the theoretical traffic of the allocated bandwidth;
a redundant bandwidth classification subunit, configured to classify a part of bandwidths of users with bandwidth utilization rates lower than a preset lower limit value of a utilization rate as a redundant bandwidth; and
a redundant bandwidth allocation subunit, configured to allocate the redundant bandwidth to users with bandwidth utilization rates higher than a preset upper limit value of the utilization rate.

10. The system according to claim 9, wherein the redundant bandwidth allocation subunit is specifically configured to evenly allocate the redundant bandwidth to each user according to the number of the users with the bandwidth utilization rates higher than the preset upper limit value of the utilization rate.

11. The system according to claim 9, wherein the redundant bandwidth classification subunit is specifically configured to classify 20 percent of the bandwidths of the users with the bandwidth utilization rates lower than the preset lower limit value of the utilization rate as the redundant bandwidth.

12. The system according to claim 8, further comprising:
a user amount acquisition unit, configured to monitor situations of users connecting to and disconnecting from the gateway in real time, and when there is a user connecting to or disconnecting from the gateway, acquire the number of the users currently connecting to the gateway.
